# FASCICULE DE BREVET EUROPEEN

(11) **EP 2 625 014 B1**
(45) Date de publication et mention de la délivrance du brevet: **08.07.2020**
(21) Numéro de dépôt: 11767680.9
(22) Date de dépôt: 05.10.2011
(51) Int. Cl.: B29C 41/00, B29C 41/04, B29C 41/46

(54) **FABRICATION D'ARTICLES A BASE DE POLYLACTIDE PAR ROTOMOULAGE**
MANUFACTURE OF ARTICLES OF POLYLACTIC ACID BY ROTATIONAL MOULDING
HERSTELLUNG VON ARTIKELN AUS POLYLACTID DURCH ROTATIONSGIESSEN

(30) Priorité: 05.10.2010 BE 201000584
(43) Date de publication de la demande: 14.08.2013
(73) Titulaire: Futerro S.A., 7760 Escanaffles (BE)
(72) Inventeur: MAZIERS, Eric, B-7180 Seneffe (BE); COUPIN, Thierry, B-7141 Carnieres (BE)
(74) Mandataire: Pronovem
(86) Numéro de dépôt international: PCT/EP2011/067354
(87) Numéro de publication internationale: WO 2012/045759

(56) Documents cités:
- EP-A1- 1 983 030
- EP-A1- 2 042 554
- BARRETT J: "QUALITY BREAKTHROUGH FOR ROTATIONAL MOULDING", EUREKA, FINDLAY PUBLICATIONS LTD., DARTFORD, GB, vol. 11, no. 7, 1 juillet 1991 (1991-07-01), pages 27-28, XP000249128, ISSN: 0261-2097

## Description

La présente invention concerne un procédé de fabrication d'articles en polylactide (PLA) par rotomoulage ainsi que les articles réalisés par ce procédé.

Le procédé de moulage par rotation, également appelé rotomoulage, est connu depuis fort longtemps et permet la réalisation d'articles plastiques creux. Ce procédé consiste à placer dans un moule de la matière plastique et mettre ce moule en rotation afin que tous les points de la surface interne du moule soient mis en contact avec la matière plastique et ensuite de chauffer l'ensemble en tournant de manière à déposer ladite matière plastique fondue sur la surface interne du moule. Par la suite, une étape de refroidissement permet la solidification de la pièce qui est ensuite sortie du moule.

Le moulage par rotation est apprécié car il évite l'induction dans la matière plastique de tensions comme celles que l'on peut trouver dans les pièces moulées par injection. En effet, la matière plastique ne subit pas de malaxage ou de compactage aussi poussé que dans une extrudeuse ou dans un dispositif d'injection. Le rotomoulage permet la fabrication d'articles de grandes dimensions, tels-que des réservoirs et des cuves.

Le polymère plastique le plus utilisé en rotomoulage est le polyéthylène mais d'autres polymères tels que les polychlorures de vinyle (PVC), les polyamides, les polycarbonates et les polypropylènes peuvent également être utilisés. Néanmoins, tous ces polymères conduisent à l'issue du procédé de rotomoulage à la formation d'objets moulés qui présentent une forme en retrait non négligeable par rapport à celle du moule. D'autre part, ces polymères se caractérisent soit par une coalescence très lente, soit par une température de fusion élevée, ce qui augmente la durée du cycle de production des objets rotomoulés préparés au départ de ceux-ci. Or, il s'avère qu'un des critères les plus significatifs pour la réussite d'un procédé de rotomoulage est la coalescence des particules de la matière plastique car généralement la conduite du procédé en dépend fortement.

La demande de brevet EP2042554 décrit des compositions comprenant à la fois du PLLA et du PDLA ayant des caractéristiques thermiques spécifiques et qui sont traitées par malaxage à une température comprise entre 215°C et 235°C avant de produire une structure stéréocomplexe, et pour être ensuite moulées par injection, soufflage ou encore par extrusion.

La demande de brevet EP1983030 se rapporte à des articles moulés et décrit des compositions qui comprennent nécessairement et absolument une résine thermoplastique et dans lequel les compositions comprendront nécessairement à la fois du PLLA et du PDLA.

La publication de Barett (1991) décrit d'une manière générale le procédé de rotomoulage, notamment son avantage dans le système de contrôle par rapport au contrôle dans le moulage par injection ou par extrusion.

Il existe donc un besoin pour produire des articles par rotomoulage qui satisfassent le critère de coalescence rapide et qui permettent d'obtenir des articles présentant un faible retrait.

La demanderesse a trouvé de manière surprenante qu'en utilisant du PLA comme polymère de base dans le procédé de rotomoulage, les inconvénients mentionnés ci-dessus peuvent être surmontés. De plus, le PLA étant un polymère biodégradable son utilisation est particulièrement appréciée et constiute un avantage par rapport aux polymères actuellement utilisés.

L'objet de la présente invention est de fournir un procédé de rotomoulage pour l'obtention d'articles présentant un faible retrait.

Un autre objet de la présente invention est de fournir un procédé de rotomoulage pour l'obtention d'articles présentant une régularité de l'épaisseur des parois.

Un autre objet de la présente invention est de fournir un procédé de rotomoulage pour l'obtention d'articles présentant un bon aspect de surface interne et externe, sans aucune coulée, bulle ou autre défaut.

Un autre objet de la présente invention est de fournir un procédé de rotomoulage pour l'obtention d'articles avec de bonnes propriétés mécaniques.

Au moins un des objets mentionnés ci-dessus est réalisé avec la présente invention.

L'invention concerne un procédé de fabrication d'articles à base de PLA par rotomoulage comprenant l'introduction dans le moule d'une matière plastique à base de PLA.

La présente invention concerne un procédé de fabrication d'un article à base de polylactide par rotomoulage comprenant les étapes suivantes:
a) placer dans un moule au moins du polylactide,
b) soumettre le polylactide à un rotomoulage qui comprend le chauffage à une température comprise entre 150°C et 230°C,
c) refroidir le moule et/ou l'article obtenu,
d) démouler l'article,
dans lequel (i) le PLA utilisé est sous forme de particules dont la taille est comprise entre 20 µm et 2.000 µm et dont la pureté optique est supérieure à 92% en poids, (ii) en ce que le refroidissement du moule et/ou de l'article obtenu à l'étape c) se fait en une seule étape jusqu'à une température comprise entre la température ambiante et une température inférieure à 100°c et .(ii) en ce que le refroidissement du moule et/ou de l'article comprend les étapes suivantes:
1) refroidissement jusqu'à une température comprise entre 100°C et 150°C,
2) maintien à cette température pendant 1 à 60 minutes,
3) refroidissement jusqu' à une température comprise entre la température ambiante et une température inférieure à 100°C.

Le polylactide utilisé dans le procédé de l'invention peut être un poly-L-lactide (PLLA), un poly-D-lactide (PDLA) et/ou un mélange de PLLA et de PDLA. On entend par PLLA, un polymère dans lequel la majorité des unités répétitives sont des monomères de L-lactide et par PDLA, un polymère dans lequel la majorité des unités répétitives sont des monomères de D-lactide. De préférence, le polylactide utilisé est le PLLA ou le PDLA, plus préférentiellement le PLLA.

Dans le procédé de la présente invention, le PLLA ou le PDLA a respectivement une pureté optique aussi appelée pureté isomérique en L ou en D supérieure à 92% en poids, de préférence supérieure à 95% en poids, plus préférentiellement supérieure ou égale à 98% en poids. Une pureté optique d'au moins 99% en poids est vraiment préférée.

Le PLLA utilisé dans l'invention comprend donc une teneur en D mer (motif monomérique de type D) inférieure à 8% en poids, de préférence inférieure à 5% en poids, plus préférentiellement inférieure ou égale à 1% en poids de PLLA et le PDLA utilisé comprend une teneur en unité L mer (motif monomérique de type L) inférieure à 8% en poids, de préférence inférieure à 5% en poids, plus préférentiellement inférieure ou égale à 1% en poids de PDLA.

Le PLA (PLLA ou PDLA) a de préférence une masse moléculaire moyenne en nombre comprise entre 30.000 et 350.000 g/mol, plus préférentiellement entre 50.000 et 175.000 g/mol, encore plus préférentiellement entre 70.000 et 150.000 g/mol lorsqu'elle est mesurée par chromatographie par perméation de gel par rapport à un standard polystyrène dans le chloroforme à 30°C. Le rapport entre la masse moléculaire moyenne en poids (Mw) et la masse moléculaire moyenne en nombre (Mn) est généralement comprise entre 1,2 et 5,0.

Le procédé de production du PLA est bien connu par l'homme de l'art. Le PLA utilisé dans l'invention peut par exemple être obtenu par le procédé décrit dans les documents WO1998/002480, WO 2010/081887, FR2843390, US5053522, US 5053485 ou US5117008.

Cependant bien que des dimensions de l'ordre de 2.000 µm conviennent parfaitement, on peut utiliser des particules dont la taille est comprise entre 50 et 1.000 µm et préférentiellement entre 100 et 800 µm. Dans la présente invention, on entend par particules les grains, notamment de formes sphériques et/ou ovoïdes. La taille correspond à la dimension la plus longue de ces particules. Dans le cas de particules sphériques, la taille correspond au diamètre de ces particules.

Les particules de PLA peuvent être obtenues par extrusion du PLA à la sortie du réacteur au travers d'une filière dont les orifices ont la dimension correspondante. Ce PLA est défini dans la présente invention comme se présentant sous la forme de « microgranulés ».

Les particules de PLA peuvent être aussi obtenues par broyage de granulés de PLA dont la dimension est supérieure à 2.000 µm, par exemple des granulés dont la dimension est comprise entre 4.000 µm et 5.000 µm. De tels granulés de PLA peuvent être obtenus après l'étape de polymérisation par extrusion en faisant passer le PLA au travers d'une filière dont les orifices ont la dimension correspondante. Dans ce cas, le broyage des granulés de PLA peut être effectué par différents types de broyeurs, tel que par exemple un broyeur à disque, un broyeur à marteau, un broyeur à broches, ou un broyeur électromagnétique, par exemple à piston. Le broyage peut se faire à température ambiante ou peut être cryogénique, c'est à dire qu'il est effectué à une température comprise entre -10 et -200°C, préférentiellement entre -20 et -100°C. Le broyage cryogénique permet notamment d'éviter le jaunissement des articles obtenus et d'obtenir un débit élevé de poudre broyée. Le broyage cryogénique permet également de produire une poudre ne comprenant pas de filaments, ce qui est particulièrement adapté au rotomoulage. Le broyage peut être effectué sous atmosphère inerte, c'est à dire en absence d'oxygène, par exemple sous azote.

Après le broyage, il est possible de mesurer et/ou de modifier la granulométrie du PLA en utilisant des tamiseurs rotatifs. Pour déterminer la granulométrie du PLA on peut utiliser une méthode de tamisage, par exemple, en utilisant des tamis de mailles différentes, ou une méthode au laser. Dans la présente invention, on définit le PLA dont la taille des particules est comprise entre 20 µm et 2.000 µm obtenu après le broyage de granulés de PLA dont la dimension est supérieure à 2.000 µm de « poudre de PLA ».

Le PLA utilisé dans le procédé de l'invention peut être soit sous forme de poudre, soit sous forme de microgranulés, soit sous forme d'un mélange de poudre et de microgranulés.

La poudre ou les microgranulés à base de PLA peuvent être utilisés seuls, c'est-à-dire tels quels sans l'addition d'autres composés ou en mélange avec différents composés, charges, agents et/ou additifs. De nombreuses méthodes de mélange du PLA utilisé dans le procédé de l'invention avec ces composés, charges, agents et/ou additifs peuvent être envisagées. Bien que l'on envisage d'effectuer de tels mélanges à l'état fondu, on peut également effectuer le mélange au niveau de la poudre et des microgranulés. Ceux-ci peuvent être par exemple ajoutés dans le moule à la poudre et/ou aux microgranulés de PLA tels qu'utilisés dans le procédé de l'invention. Ils peuvent aussi être mélangés à la poudre après le broyage ou aux microgranulés à l'aide d'un mélangeur avant l'introduction dans le moule. Ils peuvent également être introduits en mélange avec le PLA à l'état fondu obtenu directement après polymérisation. Certains de ces composés, charges, agents et/ou additifs peuvent être ajoutés au cours de la polymérisation du PLA. On peut également envisager l'ajout de ces composés, charges, agents et/ou additifs aux granulés de PLA ayant une dimension supérieure à 2.000 µm avant l'étape de broyage. La poudre et les microgranulés à base de PLA peuvent ainsi comprendre des composés antioxydants et/ou des composés stabilisants la lumière, la chaleur et/ou les UV.

A titre d'exemple, on peut citer comme composés antioxydants convenables pour l'invention, des composés comprenant des fonctions phénols stériquement encombrés sous forme simple ou oligomérique tel que l'Irganox® MD1024 de BASF. On peut également utiliser des antioxydants appelés "secondaires" tels que des composés comprenant des fonctions phosphites tel que l'Ultranox 626 de Chemtura.

Quand un de ces additifs est présent, sa concentration pondérale est comprise entre 0,05 % et 5% par rapport à la poudre et/ou aux microgranulés à base de PLA.

La poudre et les microgranulés à base de PLA peuvent également comprendre des charges de renfort et/ou de remplissage, des agents modificateurs de la résistance aux chocs, des additifs, des composés modificateurs de chaînes.

Les charges de renfort et/ou de remplissage sont préférentiellement choisies dans le groupe comprenant les charges fibreuses telles que les fibres de verre, les fibres métalliques, les fibres de carbone, les charges minérales telles que les argiles, le kaolin, ou des nanoparticules renforçantes tels les nanotubes de carbone ou en matière thermodurcissable, et les charges en poudre telles que le talc.

Les agents modificateurs de la résistance aux chocs, sont généralement des polymères de type élastomérique choisis parmi les biopolyesters (polyesters biodégradables), les copolyesters aliphatiques ou aromatiques comme le poly(butylène adipate-co-téréphtalate) et le poly(butylène succinate-co-adipate) et leurs mélanges. A titre de produits commercialisés répondant à cette définition et qui peuvent être utilisés dans la poudre et/ou les microgranulés à base de PLA, on peut citer l'Ecoflex®, produit vendu par BASF ou encore le NP EL 01, vendu par NaturePlast. Des agents modificateurs de la résistance aux chocs tels que le styrène éthylène butadiène styrène (SEBS), les élastomères acryliques tels que les élastomères polyacryliques peuvent aussi être utilisés. Les modificateurs de choc peuvent éventuellement comprendre des groupements greffés tel que de l'anhydre maléique et époxy par exemple. Les modificateurs de choc peuvent être également des mélanges des composés mentionnés ci-dessus.

Les additifs peuvent être par exemple des ignifugeants, des lubrifiants, des plastifiants, des composés utiles pour la catalyse de la synthèse de la matrice polymère, des antistatiques, des pigments, des colorants, des additifs d'aide au moulage ou des tensioactifs. Parmi les plastifiants, on peut notamment utiliser ceux de la famille des citrates, en particulier des esters citrates comme le citrate de terbutylène (TBC) ou encore des esters butyrates comme le tri-éthylène glycol di 2-éthyl hexyl butyrate ou leurs mélanges. De préférence, le TBC est utilisé.
- Les composés modificateur de chaînes sont choisis généralement parmi les copolymères et les terpolymères comprenant l'éthylène et un monomère insaturé porteur au moins d'une fraction époxyde ou acide carboxylique ou anhydride d'acide carboxylique et d'une fraction (meth)acrylate. En particulier on préfère utiliser un terpolymère d'éthylène, d'acrylate de méthyle et de méthacrylate de glycidyle. Un exemple de terpolymère est le Lotader AX8900® vendu par Arkema France.

Quand un de ces additifs est présent, sa concentration pondérale est comprise entre 0,05% et 100% par rapport à la poudre et/ou aux microgranulés de PLA. Par exemple à 50 gr de poudre de PLA peuvent être ajoutés 50 gr de modificateur de chaînes, soit 100% de modificateur de chaînes par rapport à la poudre de PLA.

Suivant un mode de réalisation, le PLA utilisé dans la présente invention est utilisé tel quel, c'est-à-dire sans l'ajout d'aucun autres composés à la poudre et/ou aux microgranulés.

Suivant un autre mode de réalisation, le PLA comprend un agent modificateur de résistance aux chocs.

Suivant un autre mode de réalisation, le PLA comprend un agent modificateur de résistance aux chocs et un plastifiant.

Suivant encore un autre mode de réalisation, le PLA comprend un agent modificateur de résistance aux chocs, un plastifiant et un agent modificateur de chaînes.

Suivant un mode particulier de l'invention, la poudre et/ou les microgranulés à base de PLA comprennent, basé sur le poids de ceux-ci, de 17 à 25% en poids d'un composé modificateur de chaînes, de 30 à 55% en poids d'un polymère élastomérique et de 20 à 45% en poids d'un plastifiant.

Le rotomoulage est un procédé bien connu de l'homme du métier. Les différents procédés de moulage par rotation comprennent tous les étapes suivantes: chargement du moule, rotation du moule, chauffage du moule, refroidissement et démoulage. La rotation du moule est généralement effectuée autour de deux axes perpendiculaires. La quantité de poudre et/ou de microgranulés à mouler introduite dans le moule peut être variable selon la taille de l'article que l'on souhaite obtenir et l'épaisseur de ses parois.

L'étape de chauffage du moule, également appelé étape de moulage se produit selon l'invention à l'étape b). La température de chauffage peut varier de 150 à 230°C. Pour des raisons de dégradation du PLA, on évitera d'utiliser une température de chauffage supérieure à 230°C. On utilise généralement une température de moulage au moins de 10°C supérieure, préférentiellement au moins de 20°C supérieure, plus préférentiellement au moins de 30°C supérieure par rapport à la température de fusion du PLA que l'on souhaite mouler. Pour le moulage, on utilise préférentiellement une température comprise entre 160 et 225°C, plus préférentiellement entre 180 et 220°C. La durée du moulage varie selon les dimensions et l'épaisseur de l'article à rotomouler, elle peut être comprise entre 5 et 300 minutes.

La durée et le temps de refroidissement dépendent de l'installation du rotomouleur, des dimensions de l'article à mouler et du type d'article que l'on souhaite. Comme mentionné précédemment, il est possible de refroidir le moule et/ou l'article contenu dans le moule. Pour refroidir le moule à l'extérieur, on peut utiliser de l'air à température ambiante, de l'eau entre 5 et 25°C ou de l'huile entre 5 et 80°C. Pour refroidir l'article à l'intérieur du moule, on peut injecter de l'air et/ou de l'eau pulvérisée à l'intérieur du moule, par exemple à 25°C. Le temps de refroidissement varie généralement entre 1 et 300 minutes dependant de l'épaisseur de l'objet à rotomouler et du procédé utilisé pour le refroidissement.

Suivant un mode de réalisation, le refroidissement du moule et/ou de l'article obtenu se fait en une seule étape jusqu' à une température comprise entre la température ambiante et une température inférieure à 100°C. Un tel refroidissement permet l'obtention d'un objet transparent et amorphe qui se caractérise par une température de transition vitreuse d'environ 60°C mesurée par analyse DSC (differential scanning calorimetry).

Selon l'invention, le refroidissement se fait progressivement, par plateau en maintenant le moule et/ou l'objet à une température comprise entre 100°C et 150°C, de préférence entre 100°C et 130°C pendant 1 à 60 minutes avant de poursuivre le refroidissement ultérieur du moule et/ou de l'objet moulé jusqu'à une température comprise entre la température ambiante et une température inférieure à 100°C. Un tel refroidissement permet l'obtention d'un objet rotomoulé cristallin qui se caractérise par une température de fusion. L'objet obtenu par ce procédé présente ainsi des propriétés de résistance thermique améliorée par rapport à celui issu du même procédé de rotomoulage mais dont la phase de refroidissement est rapide et se fait en une seule étape.

Par la suite, l'article est démoulé. Le démoulage de l'article est généralement effectué lorsque ce dernier présente une rigidité suffisante. Si l'objet moulé obtenu est amorphe, le démoulage se fait à une température comprise entre la température ambiante et 60°C, préférentiellement en dessous de 60°C, plus préférentiellement à 55°C. Si l'objet moulé obtenu est cristallin, le démoulage se fait généralement à une température inférieure à 100°C.

Le rotomoulage peut être effectué sous gaz inerte en absence d'oxygène. Pour ce faire, on peut par exemple ajouter dans le moule, avec la poudre à base de PLA, un composé libérateur de dioxyde de carbone, tel que de la carboglace. La carboglace génère en effet du dioxyde de carbone à l'état gazeux pendant l'étape de chauffage du moulage. On peut également effectuer une purge à l'azote, en injectant de l'azote après fermeture du moule.

La présente invention concerne aussi toutes utilisations du PLA sous forme de poudre et/ou de microgranulés ayant les caractéristiques mentionnées précédemment pour la fabrication d'articles par rotomoulage.

La présente invention concerne également des articles susceptibles d'être obtenus par le procédé de l'invention.

L'article susceptible d'être obtenu par le procédé de l'invention est caractérisé en ce qu'il est choisi dans le groupe comprenant des composants automobiles, des pièces techniques, du mobilier, des pièces de design, du luminaire. Parmi les pièces automobiles, on peut par exemple citer des pièces de carosserie, des composants intérieurs tels que tableau de bord, poigneés.

Les articles obtenus par le procédé de moulage par rotation selon l'invention ne comprennent pas de point de faiblesse. Ils présentent des caractéristiques homogènes, telles que par exemple une régularité de l'épaisseur des parois ainsi qu'un bon aspect de surface interne et externe, sans aucune coulée, bulle ou autre défaut. Les articles obtenus présentent également une bonne résistance au retrait. De plus, en fonction du mode de réalisation appliqué pour l'étape de refroidissement, les articles obtenus peuvent être brillants et transparents. Notons enfin que tous ces articles présentent une rigidité élevée et qu'ils peuvent être peints très facilement en raison de leurs tensions superficielles élevées.

Les articles obtenus par rotomoulage sont généralement des pièces creuses sans soudures, tels que par exemple les articles choisis dans le groupe comprenant les réservoirs, bacs, ballons, citernes, caissons, boites, cuves, pare-chocs et sièges. Ces articles peuvent comprendre des ouvertures et/ou des inserts plastiques ou métalliques.

Les parois des articles peuvent être constituées d'une ou plusieurs couches successives, éventuellement de natures différentes. Il est ainsi possible de fabriquer par ce procédé des articles dont les parois comportent par exemples deux ou trois couches. On peut par exemple réaliser des articles présentant une couche interne et externe de PLA, de nature similaire ou différente, comprenant éventuellement des composés antioxydants et/ou des composés stabilisants de chaleur, des charges, des modificateurs de chocs, des additifs et des adjuvants.

Il existe plusieurs méthodes connues pour fabriquer par rotomoulage des articles dont les parois présentent plusieurs couches. On peut par exemple introduire un mélange de PLA et/ou de polymères présentant des points de fusion différents et mouler à différentes températures pour obtenir une structure multicouche. On peut également mouler chaque couche supplémentaire avant refroidissement de la précédente.

### Exemples

### Méthodes analytiques

### 1. Détermination de la pureté optique du PLA

Dans les exemples qui suivent, la détermination de la pureté optique ou isomérique du PLA se fait par la méthode enzymatique.

Le principe de la méthode est le suivant : Les ions L-lactate et D-Lactate sont oxydés en pyruvate respectivement par les enzymes L-lactate déshydrogénase et D-lactate déshydrogénase utilisant la nicotinamide adénine dinucléotide (NAD) comme coenzyme. Pour forcer la réaction en direction de la formation du pyruvate, il est nécessaire de piéger ce composé par réaction avec l'hydrazine. L'augmentation de la densité optique à 340 nm est proportionnelle à la quantité de L-lactate ou de D-lactate présents dans l'échantillon.

Les échantillons de PLA ont été préparés en mélangeant 25 ml d'hydroxyde de sodium (1mol/L) à 0,6 g de PLA. La solution a été portée à ébullition durant 8h puis refroidie. La solution a ensuite été amenée à pH neutre par ajout d'acide chlorhydrique (1mol/L), puis de l'eau désionisée a été rajoutée en quantité suffisante pour arriver à 200 ml.

Les échantillons ont ensuite été analysés sur un analyseur Vital Scientific Selectra Junior utilisant pour la détermination en L-mer de l'acide poly-L-lactide, le coffret intitulé « L-lactic acid 5260 » commercialisé par la société Scil et pour la détermination en D-mer de l'acide poly-D-lactide, le coffret intitulé « L-lactic acid 5240 » commercialisé par la société Scil. Lors de l'analyse, un blanc réactif et une calibration utilisant le calibrant « Scil 5460 » sont utilisés.

### 2. Détermination de la masse moléculaire du PLA

Dans les exemples qui suivent, la mesure des masses moléculaires est réalisée à 30°C en utilisant un chromatographe liquide WATERS 610 : on prépare d'abord une solution de polymère dans le chloroforme de concentration 1 mg polymère/ml. 100 µl de cette solution sont prélevés et injectés, au travers d'un filtre dont les pores ont 0.2 µm de diamètre, sur la colonne du chromatographe à 30°C. Les masses moléculaires sont déterminées sur base du temps de rétention dans la colonne, d'un étalonnage réalisé avec des échantillons de polystyrène et d'une courbe de calibration universelle.

### 3. Détermination du retrait de l'objet moulé

La mesure du retrait de l'objet moulé par rapport à l'empreinte du moule se fait par analyse tridimensionnelle selon la méthode décrite dans la demande de brevet internationale publiée WO 2008/151988. Le retrait mesuré moyen sur l'objet moulé est exprimé en % par rapport au volume interne du moule.

### 4. Détermination de l'aspect des parois de l'objet moulé

L'aspect des parois, uniformité, présence de bulle et/ou de coulée est déterminée visuellement.

### 5. Détermination de la régularité de l'épaisseur des parois de l'objet moulé

La régularité de l'épaisseur des parois est déterminée par tomographie, technique bien connue par l'homme de l'art.

### 6. Détermination des propriétés mécaniques

Le module de rigidité est déterminé par la méthode ASTM D-638

### 7. Détermination de la tension superficielle

Il s'agit de mesurer les angles de contact faits par des gouttes de liquides étalons déposées à la surface à analyser à l'aide d'un goniomètre. L'équipement et les conditions opératoires sont les suivants :
Goniomètre Krüss DSA 100,
Logiciel d'exploitation des données : DropShape analysis,
Liquides étalons : diiodométhane, eau, éthylène glycol
8 à 10 gouttes par liquide étalon,
Température : 23°C
Hygrométrie : 50%

### Résines utilisées

Dans les exemples selon l'invention, les résines identifiées ci-après ont été utilisées :
- Poudre de poly-L-lactide obtenue après broyage de granulés de PLLA ayant une pureté optique de 98,5% en poids et une masse moléculaire moyenne en nombre d'environ 100.000 (équivalent PS). La taille moyenne des particules de la poudre après broyage est de 300 µm.
- Poudre de poly-L-lactide obtenue après broyage de granulés de PLA 8300 vendu par NatureWorks ayant une pureté optique de 88% en poids et une masse moléculaire moyenne en nombre de 111.000 (équivalent PS). La taille moyenne des particules de la poudre après broyage est de 300 µm.

Dans les exemples comparatifs les résines identifiées ci-après ont été utilisées:
- Poudre de polyéthylène obtenue après broyage de granulés de polyéthylène ayant une densité de 0,940 g/cm³ et un indice de fluidité de 4 g/10 min (ASTM D-1238 conditions 2,16kg/190°C). La taille moyenne des particules de la poudre après broyage est de 300 µm.
- Poudre de polypropylène obtenue après broyage de granulés d'un copolymère de polypropylène caractérisé par un indice de fluidité de 2 (ASTM D-1238 conditions 2,16kg/190°C). La taille moyenne des particules de la poudre après broyage est de 800 µm.

### Fabrication d'articles par rotomoulage

### Exemples 1 à 4

Les différentes résines sous forme de poudre telles que mentionnées ci-dessus sont utilisées séparément pour former des bouteilles par rotomoulage. Les paramètres de rotomoulage sont les suivants :
- Moule de bouteille de 7 litres sur machine Leonardo,
- Chauffage du moule de 50 à 225°C en 3 minutes,
- PIAT (peak internai air temperature) : 225°C
- Rapport de rotation: 4/1
- Refroidissement du moule de 225 à 50°C en 1 minute avec de l'huile maintenue dans une double paroi à une température inférieure à 40°C
- Démoulage à 50°C.

On détermine sur les articles obtenus l'aspect de surface interne et externe des parois, la régularité de l'épaisseur des parois, le taux de rétraction de l'objet moulé par rapport au moule, le module de rigidité et la tension superficielle. Les résultats sont présentés dans le tableau 1.

**Tableau 1**

| Exemple | Résine | Taux de Rétraction % | Module de Young MPa | Tension superficielle mJ/m² |
|---|---|---|---|---|
| 1 (invention) | PLLA | 0 | 3.200 | > 42 |
| 2 (invention) | PLLA 8300 | n.m. | n.m. | n.m. |
| 3 (comparatif) | PE | 7.5 | 800 | < 35 |
| 4 (comparatif) | PP | 4 | 1.100 | < 35 |

| | | | | |
|---|---|---|---|---|
| n.m : non mesuré. | | | | |

L'objet moulé selon le procédé de l'invention avec une résine PLA ayant une pureté optique de 98,5% en poids, (exemple 1) présente une régularité au niveau de l'épaisseur des parois ainsi qu'un bon aspect de surface interne et externe sans aucune coulée, bulle ou autre défaut. L'objet rotomoulé de l'exemple 2 présente une régularité moindre au niveau de l'épaisseur des parois et un aspect de surface interne et externe moins bon que celui de l'exemple 1. Cet objet ne rencontre pas toutes les propriétés souhaitées.

### Exemple 5

La poudre de poly-L-lactide ayant une pureté optique de 98,5% en poids telle que décrite ci-dessus a été utilisée pour former des bouteilles par rotomoulage. Les paramètres de rotomoulage sont les suivants :
- Moule de bouteille de 7 litres sur machine Leonardo,
- Chauffage du moule de 50 à 220°C en 3 minutes,
- PIAT : 215°C
- Rapport de rotation: 4/1
- Refroidissement du moule jusqu'à 110°C
- Maintien du moule à 110°C pendant 9 minutes
- Refroidissement à 70°C et démoulage à 70°C

L'objet rotomoulé obtenu est cristallin et se caractérise par un module de Young de 3.200 MPa, une tension superficielle supérieure à 42 mJ/m², l'absence de déformation (0% de taux de rétraction), une régularité au niveau de l'épaisseur des parois ainsi qu'un bon aspect de surface interne et externe sans aucune coulée, bulle ou autre défaut.

### Exemple 6 (invention) et exemple 7 (comparatif)

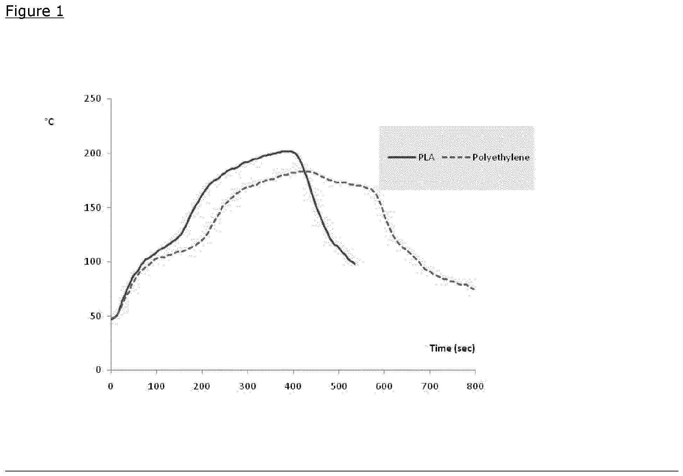

La poudre de poly-L-lactide ayant une pureté optique de 98,5% en poids ainsi que la poudre de polyéthylène telles que décrites précedement ont été utilisées séparément pour former des bouteilles de 7 litres par rotomoulage sur machine Leonardo. La température de l'air a été mesurée dans le moule pendant le rotomoulage du poly-L-lactide et du polyéthylène. La figure 1 illustre cette température en fonction du temps pour chacune des deux résines.

De manière surprenante, la coalesence du PLA est nettement plus rapide que celle du polyéthylène (PE) alors que la température de fusion du PLA (+/-170°C) est plus élevée que celle du PE (+/-140°C). D'autre part, le temps de refroidissement du PLA est aussi plus rapide que celui du PE. Ces gains de temps permettront des cycles de production par rotomoulage plus rapide en utilisant le PLA comparativement au PE.

## Revendications

1. Procédé de fabrication d'un article à base de polylactide par rotomoulage comprenant les étapes suivantes:
a) placer dans un moule au moins du polylactide
b) soumettre le polylactide à un rotomoulage qui comprend le chauffage à une température comprise entre 150°C et 230°C,
c) refroidir le moule et/ou l'article obtenu,
d) démouler l'article,
**caractérisé en ce que**
- (i) le polylactide est sous forme de particules dont la taille est comprise entre 20 µm et 2.000 µm et **en ce que** la pureté optique du polylactide est supérieure à 92% en poids,
-(ii) **en ce que** le refroidissement du moule et/ou de l'article obtenu à l'étape (c) se fait en une seule étape jusqu'à une température comprise entre la température ambiante et une température inférieure à 100°C et
-(iii) **en ce que** le refroidissement du moule et/ou de l'article obtenu à l'étape (c) comprend les étapes suivantes:
1) refroidissement jusqu'à une température comprise entre 100°C et 150°C,
2) maintien à cette température pendant 1 à 60 minutes,
3) refroidissement jusqu'à une température comprise entre la température ambiante et une température inférieure à 100°C.

2. Procédé selon la revendication 1 **caractérisé en ce que** le refroidissement à l'étape (1) se fait jusqu'à une température comprise entre 100°C et 130°C.

3. Procédé selon les revendications 1 ou 2, **caractérisé en ce que** l'étape (2) se fait pendant 1 à 30 minutes.

4. Procédé selon les revendications 1 à 3, **caractérisé en ce que** le polylactide est sous forme de particules dont la taille est comprise entre 50 µm et 1.000 µm, plus préférentiellement entre 100 µm et 800 µm.

5. Procédé selon la revendication 4, **caractérisé en ce que** le polylactide est sous forme de microgranulés ou sous forme de poudre ou d'un mélange de microgranulés et de poudre.

6. Procédé selon les revendications 1 à 5, **caractérisé en ce que** le polylactide est du PLLA, du PDLA et/ou un mélange de PLLA et de PDLA.

7. Procédé selon la revendication 6 **caractérisé en ce que** le polylactide est du PLLA ou du PDLA.

8. Procédé selon l'une quelconque des revendications 1 à 7, **caractérisé en ce que** le polylactide comprend un composé choisi dans le groupe comprenant un antioxydant.

9. Procédé selon l'une quelconque des revendications 1 à 8, **caractérisé en ce que** le polylactide comprend au moins des charges de renfort et/ou des agents modificateur de la résistance aux chocs et/ou des additifs et/ou des composés modificateur de chaînes et/ou des agents nucléant.

10. Procédé selon la revendication 9, **caractérisé en ce que** la pureté optique du polylactide est supérieure à 95% en poids, de préférence supérieure ou égale à 99% en poids.

11. Article susceptible d'être obtenu par le procédé selon l'une quelconque des revendications 1 à 10.

12. Article selon la revendication 11 **caractérisé en ce qu'**il est choisi dans le groupe comprenant des composants automobiles, des pièces techniques, du mobilier, des pièces de design, du luminaire.

## Patentansprüche

1. Verfahren zur Herstellung eines Artikels auf der Basis von Polylactid durch Rotationsumformung, umfassend die folgenden Schritte:
a) Platzieren, in eine Form, mindestens des Polylactids,
b) Aussetzen des Polylactids einer Rotationsumformung, die das Erhitzen auf eine Temperatur umfasst, die zwischen 150 °C und 230 °C liegt,
c) Abkühlen der Form und/oder des erhaltenen Artikels,
d) Entformen des Artikels.
**dadurch gekennzeichnet, dass**
- (i) das Polylactid in Form von Partikeln vorliegt, deren Größe zwischen 20 µm und 2.000 µm beträgt und dass die optische Reinheit des Polylactids über 92 Gew.-% beträgt,
- (ii) die Abkühlung der Form und/oder des in Schritt (c) erhaltenen Artikels in einem einzigen Schritt bis auf eine Temperatur erfolgt, die zwischen der Raumtemperatur und einer Temperatur unter 100 °C liegt und
- (iii) die Abkühlung der Form und/oder des in Schritt (c) erhaltenen Artikels die folgenden Schritte umfasst:
(1) Abkühlen bis auf eine Temperatur, die zwischen 100 °C und 150 °C liegt,
(2) Halten auf dieser Temperatur während 1 bis 60 Minuten,
(3) Abkühlen bis auf eine Temperatur, die zwischen der Raumtemperatur und einer Temperatur unter 100 °C liegt.

2. Verfahren nach Anspruch 1, **dadurch gekennzeichnet, dass** die Abkühlung bei Schritt (1) bis auf eine Temperatur erfolgt, die zwischen 100 °C und 130 °C liegt.

3. Verfahren nach den Ansprüchen 1 oder 2, **dadurch gekennzeichnet, dass** der Schritt (2) während 1 bis 30 Minuten durchgeführt wird.

4. Verfahren nach den Ansprüchen 1 bis 3, **dadurch gekennzeichnet, dass** das Polylactid in Form von Partikeln vorliegt, deren Größe zwischen 50 µm und 1.000 µm, bevorzugter zwischen 100 µm und 800 µm liegt.

5. Verfahren nach Anspruch 4, **dadurch gekennzeichnet, dass** das Polylactid in Form von Mikrogranulat oder in Form von Pulver oder eines Gemischs aus Mikrogranulat und Pulver vorliegt.

6. Verfahren nach den Ansprüchen 1 bis 5, **dadurch gekennzeichnet, dass** das Polylactid PLLA, PDLA und/oder ein Gemisch aus PLLA und PDLA ist.

7. Verfahren nach Anspruch 6, **dadurch gekennzeichnet, dass** das Polylactid PLLA oder PDLA ist.

8. Verfahren nach irgendeinem der Ansprüche 1 bis 7, **dadurch gekennzeichnet, dass** das Polylactid eine Verbindung umfasst, die aus der Gruppe ausgewählt ist, die ein Antioxidationsmittel umfasst.

9. Verfahren nach irgendeinem der Ansprüche 1 bis 8, **dadurch gekennzeichnet, dass** das Polylactid mindestens verstärkende Füllstoffe und/oder Mittel, die die Stoßfestigkeit verändern und/oder Additive und/oder Verbindungen, die die Ketten verändern und/oder Zellbildner umfasst.

10. Verfahren nach Anspruch 9, **dadurch gekennzeichnet, dass** die optische Reinheit des Polylactids über 95 Gew.-%, vorzugsweise über oder gleich 99 Gew.-% beträgt.

11. Artikel, erhalten durch das Verfahren nach irgendeinem der Ansprüche 1 bis 10.

12. Artikel nach Anspruch 11, **dadurch gekennzeichnet, dass** er aus der Gruppe ausgewählt ist, die Automobilkomponenten, technische Teile, Mobiliar, Designstücke, Leuchten umfasst.

## Claims

1. Method for manufacturing a polylactide product via rotational moulding, comprising the following steps:
a) placing at least polylactide in a mould;
b) subjecting the polylactide to rotational moulding that comprises heating to a temperature of between 150 °C and 230 °C;
c) cooling the mould and/or the product obtained;
d) releasing the product from the mould,
**characterized in that**
- (i) the polylactide is in the form of particles having a size of between 20 µm and 2000 µm and **in that** the optical purity of the polylactide is higher than 92 weight %,
- (ii) the cooling of the mould and/or of the product obtained at step (c) takes place in a single step down to a temperature of between ambient temperature and a temperature lower than 100 °C and
- (iii) the cooling of the mould and/or product obtained at step (c) comprises the following steps:
(1) cooling down to a temperature of between 100 °C and 150 °C;
(2) holding this temperature for 1 to 60 minutes;
(3) cooling down to a temperature of between ambient temperature and a temperature lower than 100 °C.

2. The method according to claim 1, **characterized in that** the cooling at step (1) takes place down to a temperature of between 100 °C and 130 °C.

3. The method according to claim 1 or 2, **characterized in that** step (2) is conducted for 1 to 30 minutes.

4. Method according to claims 1 to 3, **characterized in that** the polylactide is in the form of particles having a size of between 50 µm and 1000 µm, more preferably between 100 µm and 800 µm.

5. Method according to claim 4, **characterized in that** the polylactide is in the form of microgranules, or in powder form, or in a powder and microgranule mixture.

6. Method according to claims 1 to 5, **characterized in that** the polylactide is PLLA, PDLA and/or a mixture of PLLA and PDLA.

7. Method according to claim 6, **characterized in that** the polylactide is PLLA or PDLA.

8. Method according to any one of claims 1 to 7, **characterized in that** the polylactide comprises a compound selected from the group comprising an antioxidant.

9. Method according to any one of claims 1 to 8, **characterized in that** the polylactide at least comprises reinforcing fillers and/or impact strength modifying agents and/or additives and/or chain-modifying compounds and/or nucleating agents.

10. Method according to claim 9, **characterized in that** the optical purity of the polylactide is higher than 95 weight %, preferably higher than or equal to 99 weight %.

11. Product obtained with the method according to any one of claims 1 to 10.

12. Product according to claim 11, **characterized in that** it is selected from the group consisting of automotive components, technical parts, furnishings, design products, light fittings.
